# EUROPÄISCHE PATENTSCHRIFT

(11) **EP 0 773 856 B1**
(45) Veröffentlichungstag und Bekanntmachung des Hinweises auf die Patenterteilung: **27.10.2004**
(21) Anmeldenummer: 96914883.2
(22) Anmeldetag: 04.04.1996
(51) Int. Cl.: B26F 1/40, B26D 7/26, B26D 3/08

(54) **VORRICHTUNG ZUM SCHNEIDEN VON KUNSTSTOFFEN**
DEVICE FOR CUTTING PLASTICS
DISPOSITIF PERMETTANT DE DECOUPER DES MATIERES PLASTIQUES

(30) Priorität: 07.04.1995 DE 19513282
(43) Veröffentlichungstag der Anmeldung: 21.05.1997
(73) Patentinhaber: Giesecke & Devrient GmbH, 81677 München (DE)
(72) Erfinder: NEUMANN, Eugen, D-81243 München (DE); OERTEL, Achim, D-83026 Rosenheim (DE); HOHMANN, Arno, D-81369 München (DE); USNER, Jürgen, D-81375 München (DE)
(74) Vertreter: Klunker . Schmitt-Nilson . Hirsch
(86) Internationale Anmeldenummer: PCT/EP1996/001496
(87) Internationale Veröffentlichungsnummer: WO 1996/031427

(56) Entgegenhaltungen:
- WO-A-85/01241
- DE-B- 1 157 466
- DE-C- 235 814
- DE-C- 419 900
- GB-A- 653 195
- US-A- 2 352 339

## Beschreibung

Die Erfindung betrifft eine Vorrichtung zum Schneiden von Kunststoffen mit einem keilförmigen Schneidmesser und einem mit dem Schneidmesser zusammenwirkenden Gegenlager, wobei der zu schneidende Kunststoff zwischen Schneidmesser und Gegenlager angeordnet wird.

Derartige Schneidvorrichtungen sind seit längerem bekannt und werden zum Schneiden der unterschiedlichsten Sorten von Kunststoff verwendet.
Die bekannten Schneidvorrichtungen haben gegenüber herkömmlichen Stanz- bzw. Schneidvorrichtungen, bei denen eine Patrize mit einer Matrize zusammenwirkt, den Vorteil, daß sie im wesentlichen maßhaltiges Schnittgut erzeugen. Die Maßhaltigkeit ist dabei weitestgehend von dem zu schneidenden Kunststoff unabhängig, so daß auch relativ spröde und damit problematisch zu verarbeitende Kunststoffe, wie beispielsweise Polycarbonat, relativ maßhaltig geschnitten werden können. Darüber hinaus können auch unterschiedlichste Kunststoffe mit ein und derselben Schneidvorrichtung bearbeitet werden, ohne Anpassungen an den betreffenden Werkstoff vornehmen zu müssen.

So werden derartige Vorrichtungen bereits unter anderem benutzt, um einoder mehrlagige Datenträger, für die eine hohe Maßhaltigkeit gefordert ist, insbesondere Chipkarten, aus einem Kunststoffband auszuschneiden.

Das Schneiden mit einer o.g. Vorrichtung bereitet jedoch auch Probleme. So muß das Schneidmesser zum Schneiden des entsprechenden Kunststoffes den Kunststoff vollständig durchdringen und auf dem im Gegensatz zum schneidenden Kunststoff relativ harten Gegenlager aufsetzen. Beim Durchdringen des Kunststoffes verdrängen die Flanken des Schneidmessers den zu schneidenden Kunststoff, was beim Austreten des Schneidmessers aus dem Kunststoff einen Schnittgrat verursacht. Der hierbei entstehende Schnittgrat beeinflußt neben dem unschönen optischen Erscheinungsbild nach wie vor die Maßhaltigkeit des Schnittgutes negativ. Darüber hinaus wölbt sich aufgrund der einseitigen Belastung durch das Schneidmes ser das Schnittgut, was ebenfalls zu einer unschönen optischen Qualität des Schnittguts führt. Durch das beständige Aufsetzen des Schneidmessers auf dem Gegenlager stumpft das Schneidmesser schnell ab, wodurch sich relativ kurze Standzeiten für das Schneidmesser ergeben.

Aus der gattungsgemäßen WO 85/01241 A1 sowie der GB-A 653195 sind Vorrichtungen zum Schneiden von Leder, Papier und ähnlichen Materialien bekannt, bei denen das zu schneidende Material zwischen zwei keilförmige Messer eingebracht wird, wobei die Vorrichtungen derart ausgestaltet sind, daß die Schneidmesser sich in ihrer Endposition nicht berühren können. Der Nachteil dieser bekannten Vorrichtungen besteht darin, daß die Endposition der Schneidmesser unabhängig vom zu schneidenden Material festgelegt, also eine Anpassung an das zu schneidende Material nicht möglich ist.

Aufgabe der vorliegenden Erfindung ist es deshalb, eine verbesserte Schneidvorrichtung anzugeben, mit der neben verbesserten Schnittkanten des Schnittguts höhere Standzeiten des Schneidmessers erzielt werden können.

Die Aufgabe wird ausgehend vom Oberbegriff des Anspruchs 1 bzw. 9 durch die kennzeichnenden Merkmale der jeweiligen Ansprüche gelöst.

Der Grundgedanke der Erfindung ist darin zu sehen, dass als Gegenlager ebenfalls ein keilförmiges Schneidmesser verwendet wird, wobei zusätzlich einstellbare Mittel vorgesehen werden, die ein Berühren der Schneidmesser während eines Schneidvorganges verhindern. Das dadurch geschnittene Schnittgut bleibt nach dem Schneidvorgang noch über eine schmale Seele mit dem restlichen Kunststoff verbunden und kann entweder manuell oder maschinell aus dem restlichen Kunststoff ausgebrochen werden.

Die besonderen Vorteile sind darin zu sehen, daß das Schneidmesser nicht mehr die gesamte Dicke des zu schneidenden Kunststoffes durchdringen und auf dem Gegenlager aufsetzen muß. Dadurch weist das durch die Vorrichtung geschnittene Schnittgut einen erheblich verminderten Schnittgrat auf, so daß unter anderem die Maßhaltigkeit des Schnittguts noch weiter verbessert wird. Der noch verbleibende, nur noch marginal ausgebildete Schnittgrat befindet sich dabei nicht an den Rändern der Schnittkante zu den Oberflächen des Schnittguts, sondern innerhalb der Ränder, vorzugsweise mittig dazwischen. Somit wird auch verhindert, daß die Oberflächen von ober- bzw. unterhalb des Schnittgutes angeordnetem weiteren Schnittgut zerkratzt werden. Darüber hinaus stumpfen die Schneidmesser erheblich weniger ab, wodurch die Standzeit der Schneidmesser erhöht wird. Auch die beim Schneiden des Kunststoffes auftretende Wölbung des Schnittgutes kann durch eine Verwendung der erfindungsgemäßen Schneidvorrichtung vermindert werden, was zu einer Steigerung der optischen Qualität führt.

Weitere Vorteile und Weiterbildungen der Erfindung ergeben sich aus der Figurenbeschreibung. Darin zeigen:
- Fig.1: eine Schnittzeichnung durch einen Ausschnitt einer nicht erfindungsgemäßen Schneidvorrichtung,
- Fig. 2: eine Schneidvorrichtung gemäß Fig. 1 mit geschlossenen Messern,
- Fig. 3: fertiggeschnittenes Schnittgut,
- Fig. 4.: Enfindungsgemäße Weiterbildung der Schneidvorrichtung gemäß Fig. 1 mit Mitteln zum Ausbrechen des fertiggeschnittenen Schnittguts aus dem verbleibenden Kunststoff,
- Fig. 5: Schneidvorrichtung nach Fig. 4 mit halbgeschlossenen Messern,
- Fig. 6: Schneidvorrichtung nach Fig. 4 mit vollständig geschlossenen Messern,
- Fig. 7: Schneidvorrichtung nach Fig. 4 mit aus dem verbleibenden Kunststoff herausgebrochenen Schnittgut,
- Fig. 8: Schneidvorrichtung, mit der wölbungsfrei geschnitten werden kann,
- Fig. 9: Minichipkarte.

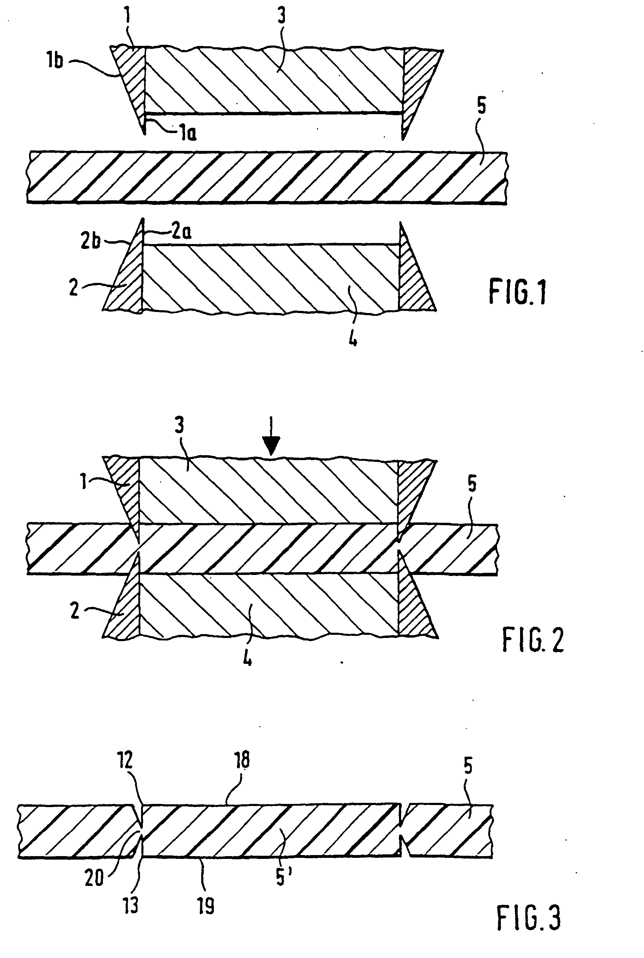

Fig. 1 zeigt den Schnitt durch einen Ausschnitt einer nicht erfindungsgemäßen Schneidvorrichtung zum Schneiden eines Schnittgutes 5' (vgl. Fig. 3) aus einem Kunststoff 5. Die Schneidvorrichtung umfaßt hierbei zwei Schneidwerkzeuge, die jeweils aus den Schneidmessern 1 und 2 und den Kernen 3 und 4 bestehen. Die Schneidmesser 1 und 2 sind jeweils starr mit den Kernen 3 und 4 verbunden. Vorzugsweise sind die Schneidmesser 1 und 2 sowie die Kerne 3 und 4 aus gehärteten Stahl. Die keilförmigen Schneidmesser sind hierbei so ausgestaltet, daß die Flanken 1a, 2a, die an das zu schneidende Schnittgut 5' angrenzen, senkrecht auf den zu schneidenden Kunststoff 5 stehen. Die Schneidmesser 1 und 2 sind weiterhin vorzugsweise identisch. Sie sind dabei derart befestigt, daß sie beim Schneidvorgang exakt übereinanderliegen.

Fig. 2 zeigt die Schneidvorrichtung nach Fig.1 mit zusammengepreßten Messern 1, 2. Die Kerne 3 und 4, die in dieser Ausführungsform starr mit den Messern 1 und 2 verbunden sind, verhindern, daß die Messer 1 und 2 tiefer in den Kunststoff 5 eindringen. Dadurch legen die Kerne 3 und 4 zum einen fest, wie groß der Abstand zwischen den Schneidmessern 1 und 2 in ihrer Endposition ist, wodurch die Kerne als Abstandshalter fungieren. Darüber hinaus begrenzen die Kerne 3 und 4 die Eindringtiefe der Schneidmesser 1 und 2 in den Kunststoff 5. Entsprechend dem Versatz der Kerne 3 und 4 zu den Schneiden der Schneidmesser 1 und 2 wird die Eindringtiefe der Schneidmesser 1 und 2 begrenzt. Die Kerne 3 und 4 sind derart mit den Messein 1 und 2 verbunden, so daß sich der Versatz unterschiedlich einstellen läßt. Damit können unterschiedliche Eindringtiefen und Abstände für die Endposition der Schneidmesser 1 und 2 eingestellt werden. Die Eindringtiefe der Messer wird vorzugsweise für beide Messer gleich gewählt, so daß sich der ohnehin vernachlässigbar kleine Schnittgrat mittig auf der Schnittkante zwischen den Rändern 12 und 13 (vgl. Fig. 3) zu den Oberflächen 18 und 19 des Schnittgutes 5' befindet. Darüber hinaus sollte der Abstand der Messer in ihrer Endposition zwischen 3 und 50 µm gewählt werden.

Fig. 3 zeigt das fertiggeschnittene Schnittgut 5', das noch über eine verbleibende Seele 20 mit dem restlichen Kunststoff 5 verbunden ist. Das Schnittgut 5' kann leicht aus dem restlichen Kunststoff 5 entfernt werden, indem es beispielsweise manuell oder mit einem Stempel ausgebrochen wird. Für.den Fall, daß das Schnittgut 5' von Hand ausgebrochen wird, sollte der Abstand der Schneidmesser 1 und 2 in ihrer Endposition zwischen 3 und 20 µm liegen.

Bei dieser sehr einfachen Ausführungsform einer nicht erfindungsgemäßen Vorrichtung können unterschiedlich dicke Kunststoffe 5 nur geschnitten Werden, wenn die Vorrichtung durch entsprechende Neueinstellung des Versatzes der Kerne 3, 4 gegenüber den Schneiden der Schneidmesser 1 und 2 an die neue Dicke des Kunststoffes angepaßt wird. Ohne Vornahme der Anpassung würden für den Fall, daß ein dünnerer Kunststoff 5 verwendet wird, die Schneidmesser 1 und 2 beim Schneidvorgang zusammenstoßen, während bei Verwendung eines dickeren Kunststoffes 5 die verbleibende Seele 20 zu stark würde, so daß das Schnittgut 5' nicht mehr unproblematisch ausgebrochen werden könnte.

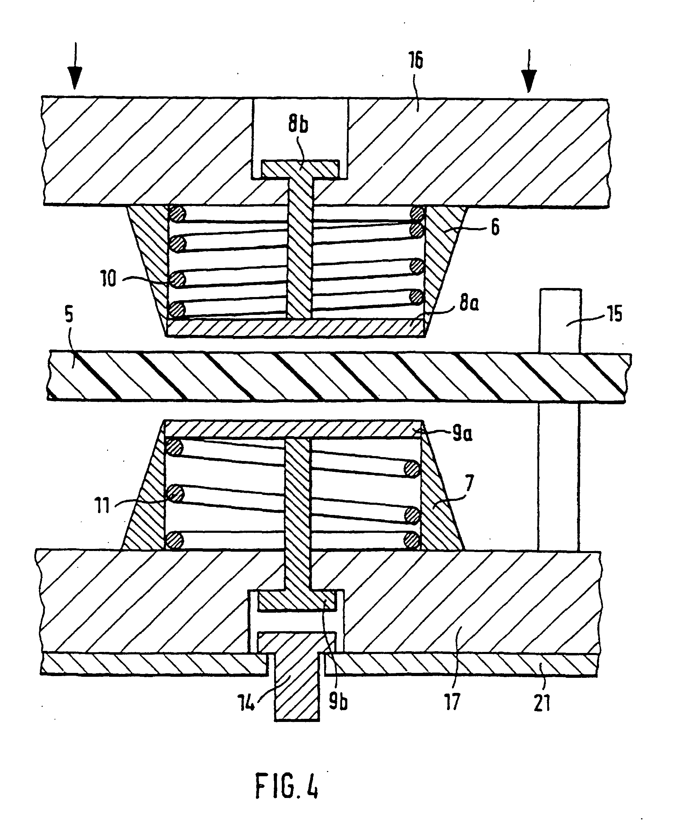

Eine erfindungsgemäße Vorrichtung, mit der auch unterschiedlich dicke Kunststoffe 5 geschnitten werden können und mit der das fertiggeschnittene Schnittgut 5' gleichzeitig ausgebrochen werden kann, zeigt Fig. 4. Die Vorrichtung weist Schneidmesser 6 und 7 und Kerne 8a, 8b und 9a, 9b auf. Die Messer 6 und 7 sind an den Montageplatten Kopflatte 16 und Fußplatte 17 befestigt. Die Kerne 8a, 8b und 9a, 9b sind beweglich in den Schneidmessern 6 und 7 geführt. Die Kerne 8a, 8b und 9a, 9b bestehen in dieser Weiterbildung aus Stempeln 8a, 9a und aus Führungen 8b und 9b. Die Führungen 8b und 9b können beispielsweise in Form von Bundschrauben bereitgestellt werden, die über ein in den Stempeln 8a und 9a befindliches Gewinde eihgeschraubt sind. Zusätzlich sind die Kerne 8a, 8b und 9a, 9b über Federn 10 und 11 mit der Fußplatte 17 bzw. der Kopfplatte 16 und damit mit den Messern 6 und 7 verbunden. Die Federn sind hierbei bereits vorgespannt, wobei die Federkraft der Feder 11 auf den Kern 9a, 9b wesentlich geringer ist als die Federkraft der Feder 10 auf den Kern 8a, 8b. Weiterhin weist die Vorrichtung eine Hubnocke 14 und einen verstellbaren Anschlag 15 auf. Um Zugriff auf die Führung 9b und die Nocke 14 zu erhalten, ist die Fußplatte 17 mit einer Abdeckplatte 21 abgedeckt und kann bei Bedarf entfernt werden.

In den folgenden Figuren soll die Funktion der Schneidvorrichtung demonstriert werden.

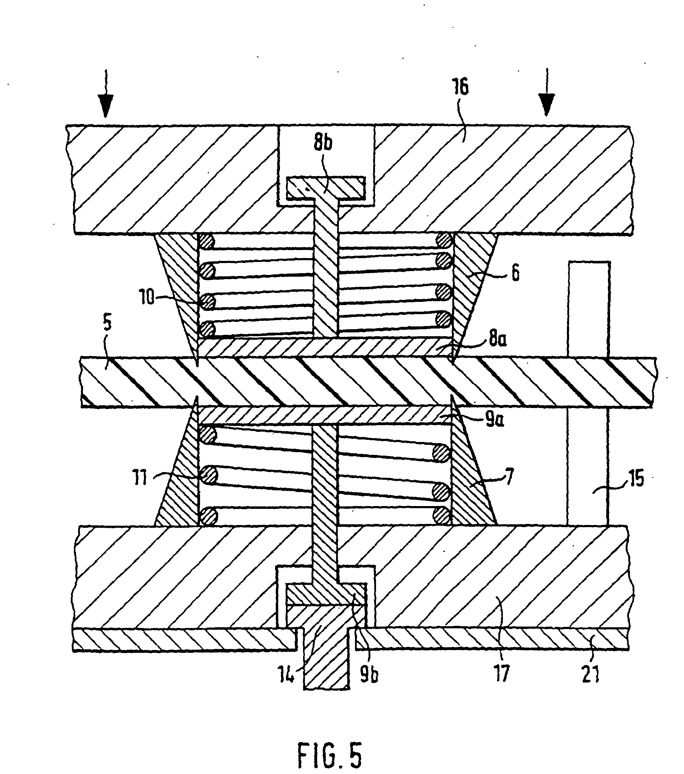

So zeigt Fig. 5 eine erste Phase des Schneidvorgangs. Hierbei wird die Kopfplatte 16 mit allen daran fixierten Teilen in Richtung der Fußplatte 17 aufgepreßt. Dabei schneiden die Schneidmesser 6 und 7 in den zu schneidenden Kunststoff 5 ein. Da die Federkraft der vorgespannten Feder 11 geringer ist als die der Feder 10 und somit der Kern 9a, 9b eher nachgibt als der Kern 8a, 8b, schneidet das Schneidmesser 7 zuerst in den Kunststoff 5 ein. Das erste Schneidmesser 7 hat in der in Fig. 5 gezeigten Phase bereits seine vorgegebene Eindringtiefe erreicht, da der Kern 9a, 9b bereits soweit eingerückt ist, daß die Führung 9b auf der Hubnocke 14, die hier als Begrenzung wirkt, aufsitzt und der Kern 9a, 9b somit starr mit dem Schneidmesser 7 gekoppelt ist. Hierdurch wird ein weiteres Eindringen des Schneidmessers 7 in den Kunststoff 5 verhindert.

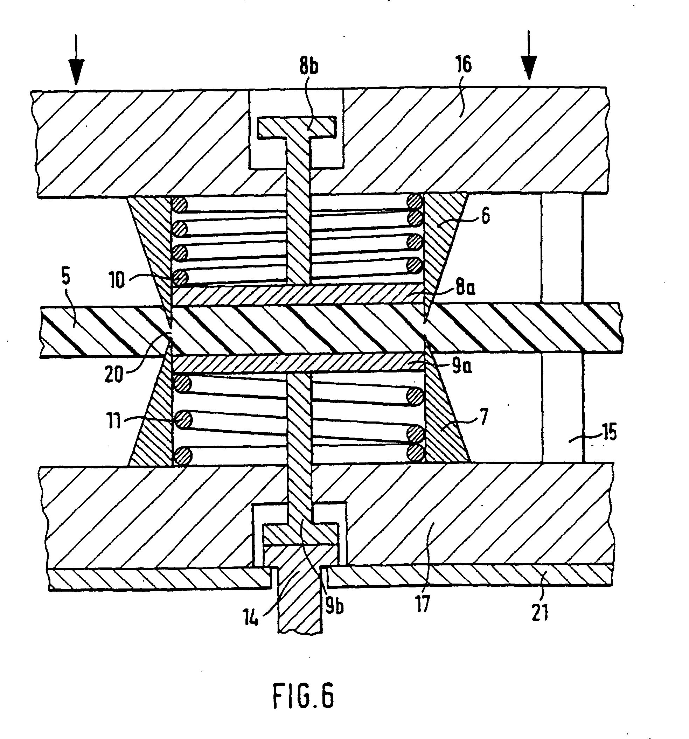

Fig. 6 zeigt eine zweite Phase des Schneidvorganges. Hierbei ist auch das zweite Messer 6 bis zu seiner vorgegebenen Eindringtiefe in das Kunststoffmaterial 5 eingedrungen. Die Eindringtiefe wird hierbei nicht wie bei dem Schneidmesser 7 durch den Kern begrenzt, sondern durch den Anschlag 15, auf den die Kopfplatte 16 aufsetzt. Ferner dient der verstellbare Anschlag 15 gleichzeitig als Abstandshalter, der die Endposition zwischen den Montageplatten Fußplatte 17 und Kopfplatte 16 festlegt und somit die Endposition der auf den Montageplatten befestigten Schneidmesser vorgibt. Der Anschlag 15 sorgt damit dafür, daß sich die Schneidmesser während eines Schneidvorganges nicht berühren.

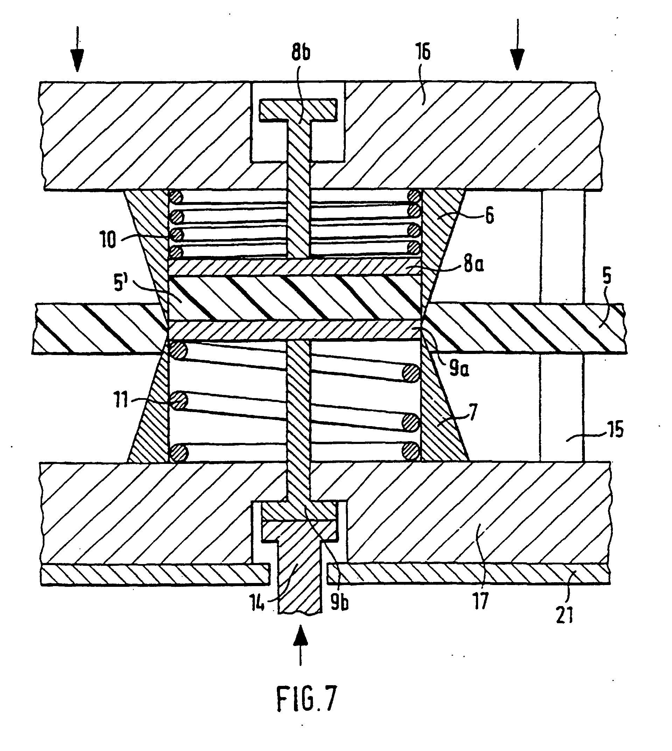

Fig. 7 zeigt die letzte Phase des Schneidvorganges. Hierin preßt die Hubnokke 14, nachdem die Schneidmesser 6 und 7 ihre Endposition erreicht haben, den ersten Kern 9a, 9b wieder in seine ursprüngliche Position zurück. Hierdurch wird das noch über. eine dünne Seele 20 mit dem restlichen Kunststoff 5 verbundene Schnittgut 5' ausgebrochen. Das Ausbrechen des Schnittgutes 5' ist hierbei nur möglich, da der zweite Kern 8a, 8b keine Begrenzung aufweist.

Natürlich kann die Hubnocke 14 auch durch eine starr mit der Fußplatte 17 verbundene Begrenzung ersetzt werden, wodurch die Vorrichtung dann zwar keinen Mechanismus zum Ausbrechen des Schnittgutes mehr aufweist und somit die in Fig. 7 gezeigte Phase entfällt, aber dafür die Gesamtkonstruktion einfacher wird.

Das Schnittgut 5' kann jetzt in einer letzten, hier nicht gezeigten Phase, aus der Schneidvorrichtung entnommen werden, indem die Kopfplatte 16 wieder angehoben wird. Die Feder 10 bringt hierbei den Kern 8a, 8b wieder in seine ursprüngliche Lage gemäß Fig. 4. Zur erneuten Inbetriebnahme der Schneidvorrichtung muß der Kunststoff 5 um einen geeigneten Betrag weitertransportiert werden und die Hubnocke 14 wieder abgesenkt werden.

Der besondere Vorteil dieser erfindungsgemäßen Vorrichtung gemäß Fig. 4 - 7 ist darin zu sehen, daß unterschiedlich dicke Kunststoffe 5 mit der Vorrichtung geschnitten werden können, ohne die Vorrichtung entsprechend anpassen zu müssen, da die Endposition der Schneidmesser 6 und 7 unabhängig von der Dicke des Kunststoffes 5 durch den verstellbaren Anschlag 15 festgelegt wird. Es verändert sich durch die Veränderung der Dicke des Kunststoffes lediglich die Lage des Schnittgrats auf der Schnittkante.

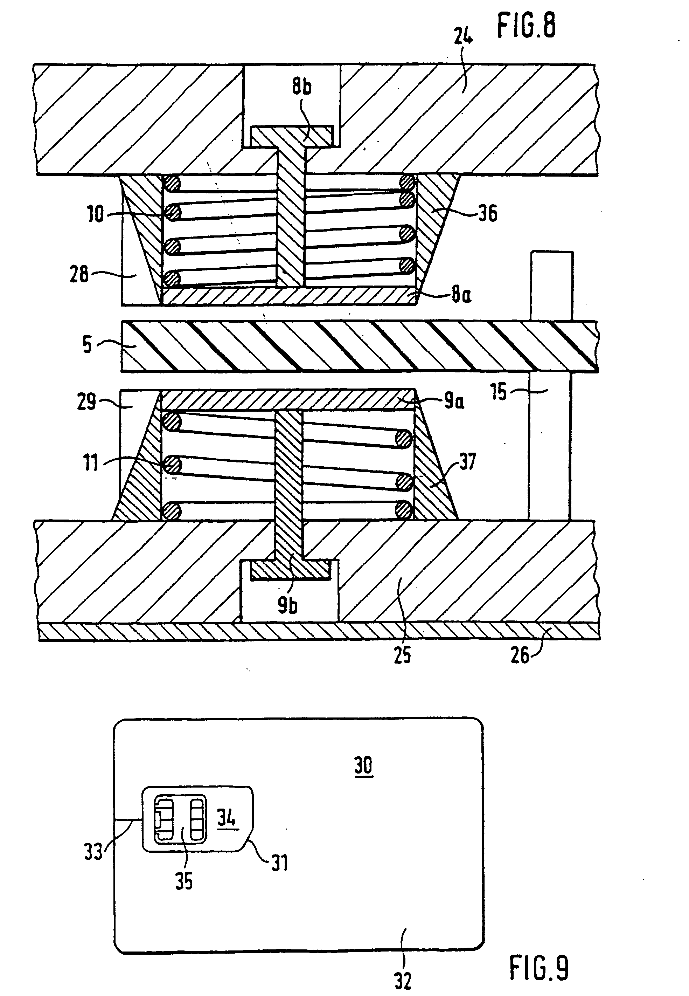

Eine andere erfindungsgemäßen Vorrichtung zeigt Fig. 8. Die Vorrichtung weist neben den obengenannten Vorteilen weiterhin den Vorteil auf, daß das Schnittgut praktisch ohne Wölbung geschnitten werden kann, wie dies im folgenden erläutert wird.

Die Vorrichtung ist im wesentlichen aufgebaut wie die Vorrichtung gemäß der Fig. 4-7. Sie weist ebenfalls zwei Montageplatten Kopfplatte 24 und Fußplatte 25 auf, an denen die Messer 36 und 37 befestigt sind. In den Messern 36 und 37 sind gleichfalls beweglich geführte Kerne 8a, 8b und 9a, 9b angeordnet, die über die Federn 10 und 11 vorgespannt sind. Die Federkraft der Feder 11 ist ebenfalls wesentlich geringer als die der Feder 10. Weiterhin ist gleichfalls ein verstellbarer Anschlag 15 vorgesehen. Darüber hinaus ist eine Begrenzung für den Kern 9a, 9b vorgesehen, die hier nicht wie bei den Fig. 4 - 7 in Form einer Hubnocke 14 beweglich, sondern in Form der Abdeckplatte 26 starr vorgesehen ist. Somit kann die Vorrichtung nicht das fertiggeschnittene Schnittgut (vgl. Fig. 7) ausbrechen. Natürlich kann aber auch die in Fig. 4 - 7 gezeigte Hubnocke 14 verwendet werden, wenn das Ausbrechen des fertiggeschnittenen Schnittguts gewünscht wird.

Der einzig wesentliche Unterschied im Gegensatz zur Vorrichtung gemäß Fig. 4 - 7 ist darin zu sehen, daß die Schneidmesser 36 und 37 zusätzliche Schneiden 28 und 29 aufweisen. Diese schneiden beim Schneiden des Schnittguts 5' zusätzlich einen Entlastungsschnitt zwischen der eigentlichen Schnittkante des Schnittguts 5' und dem Rand des Kunststoffes 5. Hierdurch wird erreicht, daß das durch die Schneiden der Messer 36 und 37 verdrängte Kunststoffmaterial beim Schneiden des Kunststoffes 5 nicht zu Verspannungen des Schnittgutes und des restlichen Kunststoffes 5 führt, wodurch Wölbungen vermieden werden. Bei der Positionierung des zu schneidenden Kunststoffes über hier nicht gezeigte Positioniermittel ist dabei darauf zu achten, daß das Schnittgut ausreichend nah am Rand des Kunststoffes ausgeschnitten wird, so daß der durch die Schneiden 28 und 29 geschnittene Entlastungsschnitt tatsächlich den Rand des Kunststoffes 5 mit der Schnittkante des Schnittgutes 5' verbindet.

In einer, hier nicht gezeigten, Weiterbildung der erfindungsgemäßen Vorrichtung werden ebenfalls zwei Schneidmesser vorgesehen, in denen beweglich geführte Kerne vorgesehen sind. Die Kerne setzen ähnlich wie Kern 9a, 9b der Fig. 4 - 7 auf einer Begrenzung auf, nachdem die Schneiden der Schneidmesser um die vorgegebene Eindringtiefe in den Kunststoff eingedrungen sind, wodurch die Kerne mit den Messern starr gekoppelt sind und sie hierdurch ein weiteres Eindringen der Schneidmesser in den Kunststoff verhindern. Der Abstand der Schneidmesser in der Endposition wird hierbei genau wie in dem in Fig.1 gezeigten Beispiel durch den Versatz der Kerne gegenüber den Schneiden der Schneidmesser bestimmt.

Zusätzlich können die Kerne auch genau wie in dem in Fig. 4 - 7 gezeigten Beispiel über vorgespannte Federn mit den Schneidmessern verbunden sein, so daß die Kerne nach dem Schneidvorgang wieder in ihre Ausgangslage gepreßt werden, wobei die Ausgangslage genau wie bei dem in Fig. 4 - 7 gezeigten Beispiel so gewählt ist, daß die Kerne im wesentlichen mit der Schneide der Schneidmesser abschließen. Hierdurch kann auch ein Ausstoß in der Schneide festsitzenden Kunststoffes gewährleistet werden.

Mit den oben gezeigten Vorrichtungen können unter anderem ein- oder mehrschichtige Datenträger mit einem Kunststoffkörper, wie beispielsweise Ausweiskarten, aus einem Kunststoffband ausgeschnitten werden. Besonders vorteilhaft ist die Verwendung für Datenträger, in denen zusätzlich ein elektronisches Modul angeordnet ist - sogenannte Chipkarten -, wie beispielsweise Telefonkarten. Das dabei im Kartenkörper angeordnete Modul umfaßt einen integrierten Schaltkreis und leitend mit dem integrierten Schaltkreis verbundene Kontaktflächen zur Kommunikation mit externen Geräten. Die Außenabmessungen solcher Datenträger mit elektronischem Modul bemessen sich heute üblicherweise nach der ISO-Norm 7810 und müssen relativ exakt eingehalten werden, um eine korrekte Kontaktierung der Kontaktflächen des elektronischen Moduls zu gewährleisten.

Eine weitere Form von Datenträgern mit einem elektronischen Modul sind sogenannte Minichipkarten oder Plug-In-Karten, die heute üblicherweise aus einem gemäß ISO 7810 gefertigten Datenträger ausgeschnitten werden, wobei auch diese Datenträger aus genannten Gründen relativ maßhaltig sein müssen. Derartige Minichipkarten können besonders vorteilhaft mit einer Vorrichtung gemäß Fig. 8 geschnitten werden. Eine dabei mit der besagten Vorrichtung geschnittene Minichipkarte ist in Fig. 9 zu sehen. Die Minichipkarte 34 mit dem oben beschriebenen elektronischen Modul 35 ist hierbei aus der gemäß ISO 7810 gefertigten Karte 30 ausgeschnitten, wobei die Schnittkante 31 über wenigstens einen Entlastungsschnitt 33 mit dem Rand des Kartenkörpers 32 der ursprünglichen Karte 30 verbunden ist. Natürlich muß der besagte Entlastungsschnitt 33 nicht zwingend vorgesehen werden.

Vorzugsweise verbleibt die so geschnittene Minichipkarte 34, die noch über eine schmale Seele mit dem restlichen Kartenkörper 32 der ursprünglichen Karte 30 verbunden ist, im Körper 32. Der Schnittgrat ist hierbei somit noch als schmale Seele ausgebildet, die die Minichipkarte mit dem Kartenkörper 32 der ursprünglichen Karte 30 verbindet. Der Kunde, der eine derartige Karte 30 erwirbt, kann die so präparierte Minichipkarte 34 dann zur erstmaligen Benutzung manuell aus dem Kartenkörper 32 ausbrechen.

Der durch die Verwendung der erfindungsgemäßen Vorrichtung verbleibende Schnittgrat an den Schnittkanten der oben beschriebenen Datenträger befindet sich, soweit überhaupt noch wahrnehmbar, zwischen den Rändern zu den Oberflächen des Datenträgers und vorzugsweise in der Mitte der Schnittkante. Dazu werden die Vorrichtungen vorzugsweise so eingestellt, daß sich der Schnittgrat bei einem gemäß ISO 7810 gefertigten Datenträger in etwa mittig auf der Schnittkante befindet.

Selbstverständlich ist die Erfindung nicht auf die in den Figuren 4-8 gezeigten Ausführungsformen beschränkt. So zeigen diese gezeigten Figuren nur rein schematisch den Aufbau möglicher erfindungsgemäßer Vorrichtungen, wobei die Vorrichtungen durchaus auch anders aufgebaut sein können. So können beispielsweise die Führungen 8b und 9b auch derart ausgestaltet sein, so daß sich der Versatz der Kerne 8a, 8b und 9a, 9b verändern läßt. Es ist weiterhin auch eine Schneidvorrichtung mit Schneidmessern denkbar, bei der nur eines der Schneidmesser oder keines der Schneidmesser die besagten Kerne zur Begrenzung der Eindringtiefe aufweisen. Darüber hinaus wird erfindungsgemäß auch bei der Vorrichtung gemäß Fig. 1 zusätzlich ein Anschlag, ähnlich dem Anschlag 15, vorgesehen werden, der die Endposition der Messer 1 und 2 festlegt. Natürlich sind auch kombinierte Formen möglich.

## Patentansprüche

1. Vorrichtung zum Schneiden von Kunststoffen mit einem ersten keilförmigen Schneidmesser (6) und mit einem als Gegenlager mit diesem zusammenwirkenden zweiten keilförmigen Schneidmesser (7), die jeweils auf Montageplatten (16, 17) montiert sind, wobei der zu schneidende Kunststoff (5) zwischen erstem und zweitem Schneidmesser (6, 7) angeordnet wird und mit Mitteln, welche den Abstand der Schneidmesser in ihrer Endposition bestimmen, um eine Berührung der Schneidmesser (6,7) während des Schneidvorganges zu verhindern,
**dadurch gekennzeichnet, daß**
die genannten Mittel einen verstellbaren Anschlag (15) umfassen, der den Abstand zwischen den Montageplatten (16, 17) begrenzt.

2. Vorrichtung nach Anspruch 1, **dadurch gekennzeichnet, dass** die genannten Mittel mit den Schneidmessern (6, 7) verbundene und während des Schneidvorganges gegenüber den Schneiden der Schneidmesser (6, 7) zurückversetzte Kerne (8a, 9a) umfassen.

3. Vorrichtung nach Anspruch 2, **dadurch gekennzeichnet, dass** die Kerne (8a, 9a) in den Schneidmessern (6,7) beweglich geführt sind, und dass ein Kern (9a) nach dem Erreichen der vorgegebenen Eindringtiefe des Schneidmessers (7) in den Kunststoff über eine Begrenzung (14) mit dem Schneidmesser (7) starr gekoppelt ist.

4. Vorrichtung nach Anspruch 3, **dadurch gekennzeichnet, dass** die Begrenzung eine Hubnocke (14) ist, die, nachdem sich die Schneidmesser (6, 7) in ihrer Endposition befinden, den mit dem Messer (7) starr gekoppelten Kern (9a) gegen das noch über eine schmale Seele (20) mit dem Kunststoff (5) verbundene Schnittgut (5') presst, wobei dieses aus dem Kunststoff (5) ausgebrochen wird.

5. Vorrichtung nach einem der Ansprüche 2, 3 und 4, **dadurch gekennzeichnet, dass** die Kerne (8a, 9a) zusätzlich über Federn (10, 11) mit den Schneidmessern (6, 7) verbunden sind, so dass die Kerne (8a, 9a) nach dem Schneidvorgang durch die Federn (10, 11) wieder in ihre Ausgangslage gepresst werden, wobei die Ausgangslage derart gewählt ist, dass die Kerne (8a, 9a) im wesentlichen mit der Schneide der Schneidmesser (6, 7) abschließen.

6. Vorrichtung nach einem der vorhergehenden Ansprüchen,
**dadurch gekennzeichnet, dass** der Abstand der Schneidmesser (6,7) in der Endposition zwischen 3 und 50 µm liegt.

7. Vorrichtung nach einem der vorhergehenden Ansprüchen,
**dadurch gekennzeichnet, dass** die Schneidmesser (6,7) zusätzliche Schneiden (28, 29) aufweisen, die beim Schneiden des Schnittguts (34) wenigstens einen Entlastungsschnitt (33) vorzugsweise zwischen der Schnittkante (31) des Schnittguts (5'; 34) und dem Rand des Kunststoffes (5; 32) schneiden.

8. Verfahren zum Schneiden von Schnittgut aus Kunststoffen mit folgenden Verfahrensschritten: .
- Bereitstellen eines Kunststoffes (5),
- Einrühren des Kunststoffs (5) zwischen zwei Reilförmigen Schneidmesser (6, 7), die jeweils auf Montageplatten montiert sind,
- Zusammenpressen der Schneidmesser (6,7) unter Verwendung eines Abstandhalters derart, daß der Kunststoff von beiden Seiten geschnitten wird und die Schneidmesser sich nicht berühren,
**dadurch gekennzeichnet, daß**
- der Abstandhalter einen verstellbaren Anschlag (15) umfäßt, der den Abstand zwischen den Montageplatten (16,17) begrenzt und in Abhängigkeit von dem bereitgestellten Kunststoff (5) derart eingestellt wird, daß die Schneidmesser (6,7) sich beim Zusammenpressen nicht berühren.

9. Verfahren nach Anspruch 8, **dadurch gekennzeichnet, dass** nach dem Schneiden über eine schmale Seele (20) mit dem restlichen Kunststoff (5) verbundenes Schnittgut (5') aus dem Kunststoff (5) ausgebrochen wird.

10. Verfahren nach Anspruch 9, **dadurch gekennzeichnet, dass** das Schnittgut (5') vor dem Öffnen der Schneidmesser (6,7) durch einen im Inneren wenigstens eines Schneidmessers (7) befindlichen Kern (9a) ausgebrochen wird.

## Claims

1. An apparatus for cutting plastics having a first wedge-shaped cutting knife (6) and a second wedge-shaped cutting knife (7) cooperating therewith as a support, which are in each case mounted on mounting plates (16, 17), the plastic (5) to be cut being disposed between first and second cutting knives (6, 7), and having means for determining the distance of the cutting knives in their end position to prevent the cutting knives (6, 7) from touching during the cutting process,
**characterized in that**
said means comprise an adjustable stop (15) which limits the distance between the mounting plates (16, 17).

2. An apparatus according to claim 1, **characterized in that** said means comprise cores (8a, 9a) connected with the cutting knives (6, 7) and set back from the cutting edges of the cutting knives (6, 7) during the cutting process.

3. An apparatus according to claim 2, **characterized in that** the cores (8a, 9a) are movably guided in the cutting knives (6, 7), and one core (9a) is coupled rigidly with the cutting knife (7) via a limit (14) after the cutting knife (7) has reached the predetermined penetration depth in the plastic.

4. An apparatus according to claim 3, **characterized in that** the limit is a lifting cam (14) which, once the cutting knives (6, 7) are located in their end position, presses the core (9a) coupled rigidly with the knife (7) against the cut material (5') still connected with the plastic (5) via a narrow central portion (20), thereby breaking said cut material out of the plastic (5).

5. An apparatus according to any of claims 2, 3 and 4, **characterized in that** the cores (8a, 9a) are connected with the cutting knives (6, 7) additionally via springs (10, 11) so that the cores (8a, 9a) are pressed back into their starting position by the springs (10, 11) after the cutting process, the starting position being selected in such a way that the cores (8a, 9a) close substantially with the cutting edges of the cutting knives (6, 7).

6. An apparatus according to any of the above claims, **characterized in that** the distance of the cutting knives (6, 7) in the end position is between 3 and 50 microns.

7. An apparatus according to any of the above claims, **characterized in that** the cutting knives (6, 7) have additional cutting edges (28, 29) which make at least one relief cut (33) preferably between the edge of cut (31) of the material (5', 34) and the border of the plastic (5, 32) during the cutting of the material (34).

8. A method for cutting material out of plastics having the following method steps:
- providing a plastic (5),
- introducing the plastic (5) between two wedge-shaped cutting knives (6, 7) which are in each case mounted on mounting plates,
- pressing the cutting knives (6, 7) together using a distance piece in such a way that the plastic is cut from both sides and the cutting knives do not touch,
**characterized in that**
- the distance piece comprises an adjustable stop (15) which limits the distance between the mounting plates (16, 17) and is adjusted in accordance with the provided plastic (5) in such a way that the cutting knives (6, 7) do not touch when being pressed together.

9. A method according to claim 8, **characterized in that** cut material (5') connected with the remaining plastic (5) via a narrow central portion (20) after cutting is broken out of the plastic (5).

10. A method according to claim 9, **characterized in that** before the cutting knives (6, 7) are opened the cut material (5') is broken out by a core (9a) located within at least one cutting knife (7).

## Revendications

1. Dispositif de coupe de matières plastiques avec un premier couteau cunéiforme (6) et avec, comme palier opposé, un deuxième couteau cunéiforme (7) exerçant une action conjointe avec celui-ci, la matière plastique à couper (5) étant disposée entre le premier et le deuxième couteau (6, 7), qui sont respectivement montés sur des plaques de montage (16, 17), et doté de moyens qui déterminent l'écart des couteaux dans leur position finale, afin d'éviter un contact des couteaux (6, 7) pendant la coupe, **caractérisé en ce que** les moyens mentionnés comprennent une butée réglable (15), qui limite l'écart entre les plaques de montage (16, 17).

2. Dispositif selon la revendication 1 , **caractérisé en ce que** les moyens mentionnés comprennent des noyaux (8a, 9a) reliés aux couteaux (6, 7) et déplacés en arrière par rapport aux lames des couteaux (6, 7) pendant la coupe.

3. Dispositif selon la revendication 2, **caractérisé en ce que** les noyaux (8a, 9a) dans les couteaux (6, 7) sont guidés de manière mobile et **en ce qu'**un noyau (9a) est couplé de manière rigide avec le couteau (7) via une limitation (14) après que le couteau (7) a atteint la profondeur de pénétration prescrite dans la matière plastique.

4. Dispositif selon la revendication 3, **caractérisé en ce que** la limitation est une came de levage (14) qui, après que les couteaux (6, 7) se trouvent dans leur position finale, presse le noyau (9a) couplé de manière rigide avec le couteau (7) contre le produit à couper (5') encore relié à la matière plastique (5) par un fil mince (20), ce dernier étant alors détaché de la matière plastique.

5. Dispositif selon l'une des revendications, 2, 3 et 4, **caractérisé en ce que** les noyaux (8a, 9a) sont en outre reliés aux couteaux (6, 7) par des ressorts (10, 11), de telle manière que les noyaux (8a, 9a) soient à nouveau pressés dans leur position initiale par les ressorts (10, 11) après la coupe, la position initiale étant choisie de manière à ce que les noyaux (8a, 9a) affleurent pour l'essentiel avec la lame des couteaux (6, 7).

6. Dispositif selon l'une des revendications précédentes, **caractérisé en ce que** l'écart entre les couteaux (6, 7) en position finale se situe entre 3 et 50 µm.

7. Dispositif selon l'une des revendications précédentes, **caractérisé en ce que** les couteaux (6, 7) comportent des lames supplémentaires (28, 29) qui, lors de la coupe du produit à découper (34), effectuent au moins une coupe de décharge (33), de préférence entre l'arête de coupe (31) du produit à couper (5', 34) et le bord de la matière plastique (5, 32).

8. Procédé de coupe de produit à couper en matières plastiques comprenant les étapes de procédé suivantes :
- approvisionnement d'une matière plastique (5),
- introduction de la matière plastique (5) entre deux couteaux cunéiformes (6, 7) respectivement montés sur des plaques de montage,
- pression des couteaux (6, 7) l'un contre l'autre en utilisation un écarteur, de telle manière que la matière plastique soit coupée des deux côtés et à ce que les couteaux ne se touchent pas,
**caractérisé en ce que** l'écarteur comprend une butée réglable (15) qui limite l'écart entre les plaques de montage (16, 17) et est réglée en fonction de la matière plastique (5) traitée de telle manière que les couteaux (6, 7) ne se touchent pas pendant la pression.

9. Procédé selon la revendication 10, **caractérisé en ce que** après la coupe, du produit à couper (5') relié au reste de la matière plastique (5) par un fil mince (20) est détaché de la matière plastique (5).

10. Procédé selon la revendication 9, **caractérisé en ce que** le produit à couper (5') est détaché par un noyau (9a) qui se trouve à l'intérieur d'au moins un couteau (7) avant l'ouverture des couteaux (6, 7).
